# EUROPEAN PATENT SPECIFICATION

(11) **EP 0 485 223 B1**
(45) Date of publication and mention of the grant of the patent: **24.02.1999**
(21) Application number: 91310329.7
(22) Date of filing: 07.11.1991
(51) Int. Cl.: G05B 19/418

(54) **An automatic control system for a numerically controlled router**
Automatisches Steuerungsystem für eine numerisch gesteuerte Plattenfräsvorrichtung
Système de commande automatique pour une toupie à commande numérique

(30) Priority: 07.11.1990 JP 301385/90; 07.11.1990 JP 301386/90; 30.11.1990 JP 337314/90
(43) Date of publication of application: 13.05.1992
(73) Proprietor: HEIAN CORPORATION, Hamamatsu-shi, Shizuoka-ken (JP)
(72) Inventor: Suzuki, Yukitomo, Hamamatsu-shi, Shizuoka-ken (JP)
(74) Representative: Gordon, Michael Vincent

(56) References cited:
- EP-A- 0 069 476
- EP-A- 0 229 668
- GB-A- 2 058 658
- US-A- 4 947 980
- MANUFACTURING REVIEW vol. 2, no. 4, December 1989, NEW YORK US pages 257 - 265 C.T. CULBRETH ET AL

## Description

The present invention relates to an automatic processing system of a numerical control router for continuously processing boards of wood boards plywood, resin board, star wood, light metal and so on.

Generally, a suction table of numerical control router is composed by a metal in midair and the hollow portion of the suction table is passed through a plurality of small holes and is connected to a vacuum pump. When a process board is positioned and processed on such suction table, the process board not directly positioned because a tool may penetrate the process board and a sacrifice board made of wood having a plurality of small holes corresponding to the holes of the suction table is previously positioned on the suction table and the process board is positioned on the sacrifice board.

As the sacrifice boards are promiscuously put near the numerical control router and the sacrifice board corresponding to the process board is sought in the sacrifice boards and set on the suction table of the numerical control router, the productivity of an operator is very low.

The article "A Flexible Manufacturing System for Furniture Production" from Manufacturing Review volume 2, number 4 pages 257-265 describes a flexible furniture manufacturing cell (FFMC) which has the ability to produce a variety of components and to automatically reconfigure itself for the production of each type of component. This minimises the setup time of the machinery which is important when parts are produced in very small lots. Each workpiece is transferred from a conveyor by a robot and placed on a plywood sheet or sacrifice board covering the machine table, with a rubber gasket outlining the perimeter of the part to be machined from the workpiece. The sacrifice board has holes bored within the gasket allowing a vacuum pump beneath the table to hold the workpiece in place by suction with the rubber gasket forming a seal. A different sacrifice board is therefore required for each type of component. The workpiece is then machined using a variety of computer controlled tools.

GB-A-2058658 discloses a wood working router wherein a workpiece is held on the router table by suction. Between the workpiece and the table is a synthetic resin sacrifice board which has holes bored through it and has porous packing sheets disposed on its upper and lower surfaces. The router comprises a turret head having several radially extending tools for processing the workpiece.

The invention concerns an automatic processing system, for use in the processing of boards, comprising:
a numerically controlled router including a suction table with suction holes and a head structure with routing means; a sacrifice board, with suction holes therethrough, for positioning on the suction table; a supply conveyor for carrying a process board to a supply position; and a robot for transferring the process board from the supply position of the supply conveyor to the suction table of the numerically controlled router, where the process board is located above the sacrifice board by the use of sensors; the head structure being movable across the suction table to enable the process board, when held by the application of suction through the suction holes of the suction table and the suction holes of the sacrifice board, to be processed by the routing means of the head structure; is characterised in that the sensors are provided on stoppers, which are themselves provided on the numerically controlled router at two adjacent sides of the suction table and are set by moving cylinders; and the supply conveyor carries a pallet on which one or more of the process boards are stacked, with the sacrifice board initially being stacked on top of the single or uppermost process board; the robot first transferring the sacrifice board from the pallet on to the suction table, then positioning said sacrifice board at a predetermined position determined by contact of said sacrifice board with the sensors, and then transferring the single or uppermost process board from the pallet on to the sacrifice board, whereby said process board is positioned at a predetermined location determined by contact of said process board with the sensors.

Also, the present invention comprises a board storehouse having shelves for storing a plurality of pallets and a plurality of process boards and a sacrifice board fitting the process boards which are stacked on the pallets, a traverser carrying the pallets from the shelves to the supply position, a supply conveyor carrying the pallet from supply position to a predetermined position, a robot for positioning the sacrifice board on the suction table from the pallet and for positioning the process boards on the sacrifice board from the pallet, and a numerical control router for processing the process boards.

Fig. 1 shows a plane view of a numerical control router system in the embodiment of the present invention.

Fig. 2 shows an outline construction view of a rule stopper in the numerical control router in Fig. 1.

Fig. 3 shows a magnified construction view of a rule stopper in the numerical control router in Fig. 2.

Fig. 4 shows a block diagram of a control unit of the numerical control router in Fig. 1.

Fig. 5 shows a flow chart for explaining the motion of the numerical control router in Fig. 1.

Fig. 6 shows a flow chart for explaining the numerical control router in Fig. 1.

Fig. 7 shows a partial composition of the numerical control router in the other embodiment of the present invention.

Fig. 8 shows a partial composition of the numerical control router in the further embodiment of the present invention.

Fig. 9 shows a whole plane view of the automatic processing system of the numerical control router in the other embodiment of the present invention.

Fig. 10 shows a side view of the automatic processing system of the numerical router in the other embodiment of the present invention.

Fig. 11 shows a block diagram of a control unit of the automatic processing system of the numerical control router in Figs. 9 and 10.

Fig. 12 shows a flow chart for explaining the motion of the automatic processing system of the numerical control router in Figs. 9 and 10.

Fig. 13 shows a flow chart for explaining the motion of the automatic processing system of the numerical control router in Figs. 9 and 10.

Fig. 14 shows a partial composition of the automatic processing system of the numerical control router in the other embodiment if the present invention.

Fig. 15 shows a partial composition of the automatic processing system of the numerical control router in the further embodiment of the present invention.

Fig. 16 shows a flow chart for explaining the motion of the automatic processing system of the numerical control router in Fig. 1.

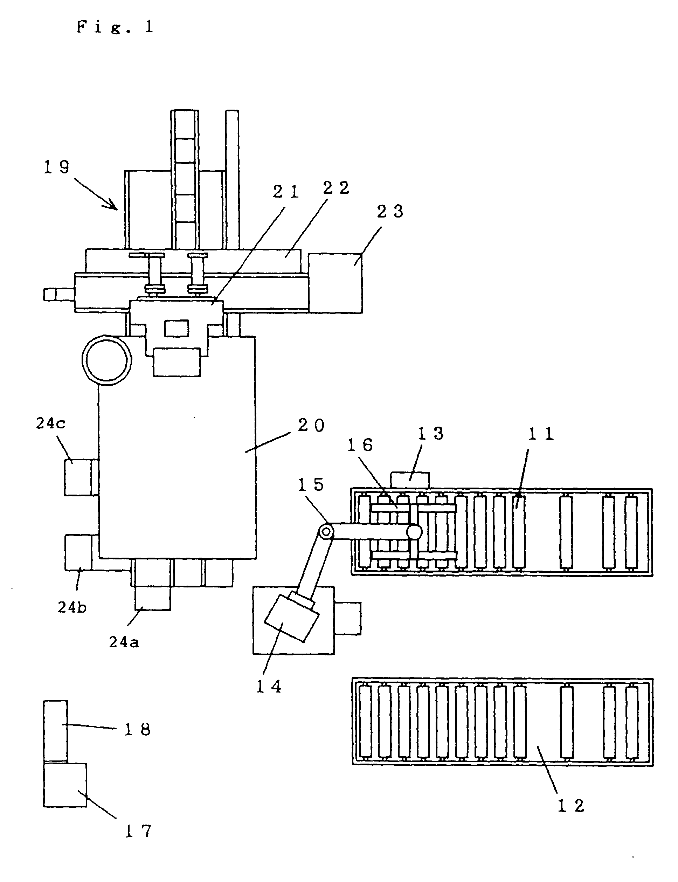

Referring to Fig. 1, in the numerical control router processing system, a supply conveyor 11 and a discharge conveyor 12 are arranged in a row, and a conveyor control unit to controlling the supply conveyor 11 and the discharge conveyor 12 is arranged in the supply conveyor 11. A robot 14 is arranged near the supply conveyor 11 and discharge conveyor 12 and has a working arm 15 and a suction pad 16 connected to the end portion of the working arm 15. Also, a robot control unit 17 is arranged apart from the turn way of the working arm 15 of the robot 14 and a main control unit 18 is closely arranged to the robot control unit 17. A suction table 20 of a numerical control router 19 is arranged near the robot 14, a head structure 21 is mounted for movement across the suction table 20, first and second control units 22 and 23 are mounted on the numerical control router 19 and rule stoppers 24a, 24b and 24c are attached to a bed portion of the numerical control router 19.

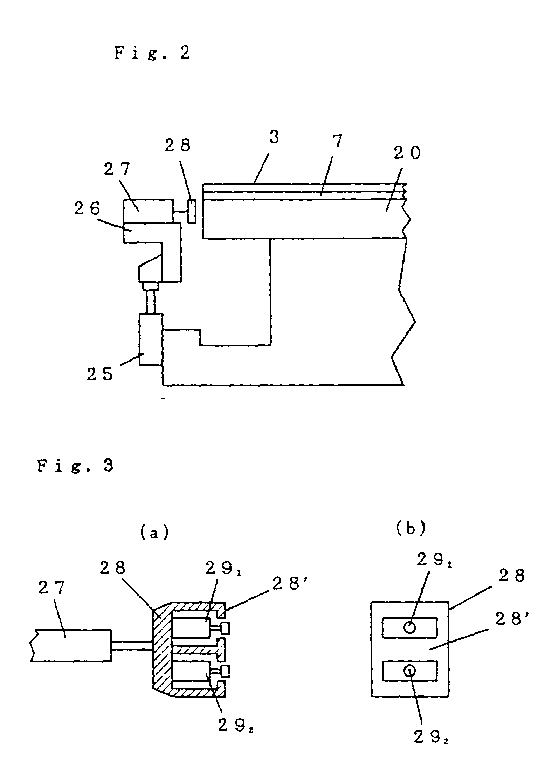

Referring to Figs. 2 and 3, in the rule stoppers 24a, 24b and 24c, an up-down cylinder 25 is attached to the bed portion under the suction table 20, a supporting stage 26 is attached to the working shaft of the up-down cylinder 25 and a cylinder 27 is attached to the supporting stage 26. A detecting portion 28 is attached to the working shaft of the cylinder 27, a contact face portion 28' is accorded to the side face of the suction table 20, and a sensor 29₁ for detecting the side of a process board 3 and a sensor 29₂ for detecting the side of a sacrifice board 7 are mounted on the contact face portion 28'. As these sensors 29₁ and 29₂, limit switches, electromagnetic sensors, light sensors, proximity sensors and so on are used. When the contact face portion 28' of the detecting portion 28 detects the side of the sacrifice board 7 or the process board 3, the sacrifice board 7 and the process board 3 are set on the suction table 20.

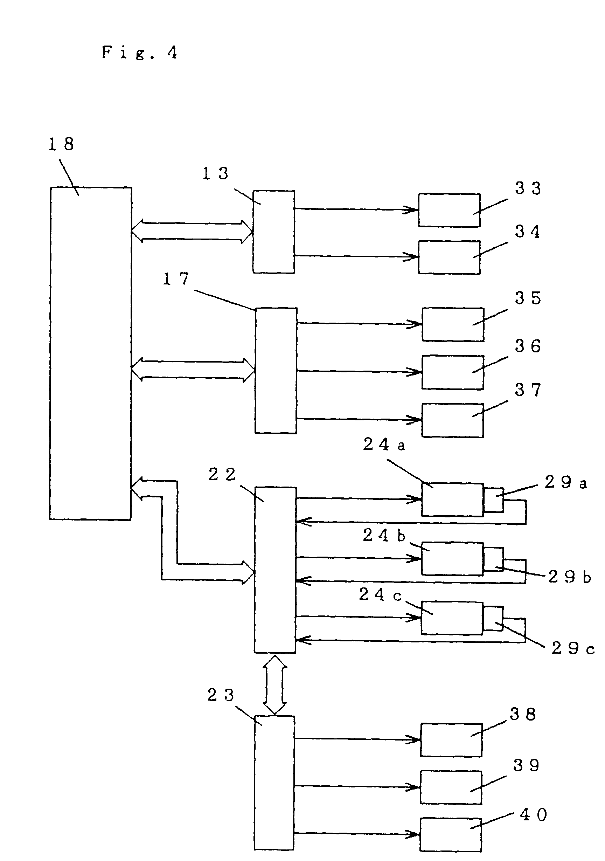

Referring to Fig. 4, the conveyor control unit 13 is connected to the main control unit 18 and a motor 33 for driving the supply conveyor 11 and a motor 34 for driving the discharge conveyor 12 are connected to the conveyor control unit 13. Also, the robot control unit 17 is connected to the main control unit 18 and a turn motor 35 for turning the robot 14, a servomotor 36 for driving the working arm 15 and a vacuum pump 37 for drawing the sacrifice board 7 or the process board 3 with the suction pad 16 are connected to the robot control unit 17. The first and second control units 22 and 23 are connected to the main control unit 18. The rule stoppers 24a, 24b and 24c are connected to the first control unit 22 and the output terminals of sensors 29a, 29b and 29c are connected to the first control unit 22. A vacuum pump 38 for drawing the sacrifice board 7 and the process board 3 on to the suction table 20, a driving unit 39 for driving the numerical control router 19 and a suction sensor 40 for detecting the suction pressure in the suction table 20 are connected to the second control unit 23.

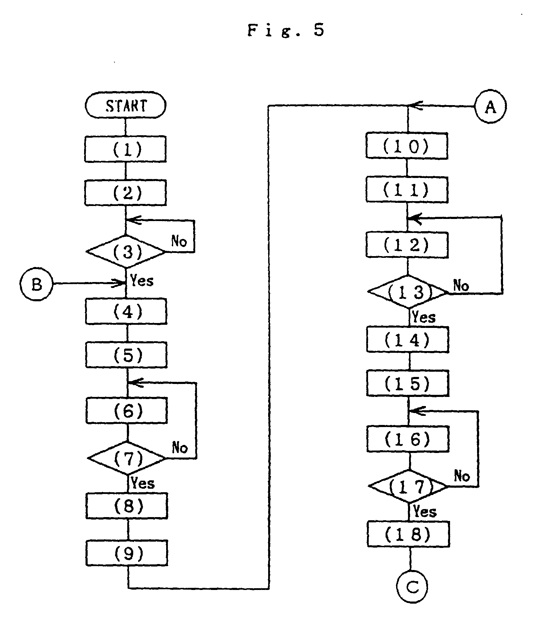

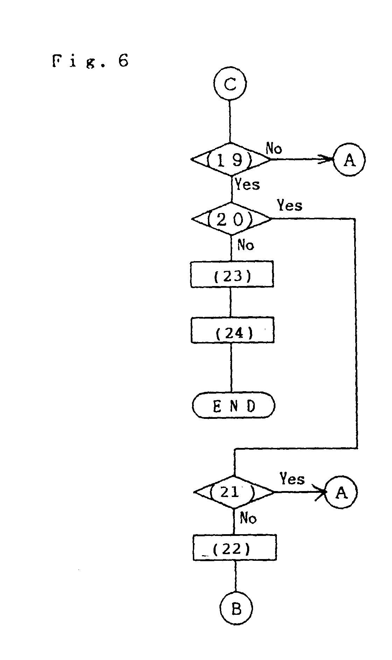

The operation of the first embodiment of the automatic processing system is explained in Figs. 5 and 6 as follows:-
(1) When the system is started by putting on the power supply, the numerical control router 19 and the robot 14 are returned to original points.
(2) The start signals and program signals are transmitted from the main control unit 18 to the robot control unit 17, the conveyor control unit 13 and the first and second control units 22 and 23 of the numerical control router 19.
(3) Then, the conveyor control unit 13 continues to detect by a detector (not shown) mounted on a predetermined position of the supply conveyor 11 whether or not a pallet, on which the sacrifice board 7 and the process boards 3 are stacked, is at a supply position of the supply conveyor 11. The supply conveyor 11 is driven with the motor 33. When the pallet is put on the supply conveyor 11, the pallet is carried to the supply position and the supply conveyor 11 is stopped. When the pallet is directly put on the supply position, the supply conveyor 11 is stopped.
(4) When the pallet is at the supply position of the supply conveyor 11, the turn motor 35 is driven by a signal from the robot control unit 17 and the robot 14 is turned thereby. Then the working arm 15 is driven with the servomotor 36 and the suction pad 16 is moved on to the sacrifice board 7. When the suction pad 16 draws the sacrifice board 7 by driving the vacuum pump 37 of the robot 14, the working arm 15 is driven and the sacrifice board 7 is moved on to the suction table 20 of the numerical control router 19.
(5) Next, the first control unit 22 drives the cylinders 25 and 27 of the rule stoppers 24a, 24b and 24c and the detecting portions 28 are arranged at predetermined positions at two adjacent sides of the suction table 20.
(6) The robot 14 moves to contact the sacrifice board 7 drawn by the suction pad 16 with the detecting portions 28 of the rule stoppers 24a, 24b and 24c.
(7) Then, the first control unit 22 watches whether all of the sensors 29a, 29b and 29c are put on as a result of contact with the sacrifice board 7.
(8) When the sensors 29a, 29b and 29c are put on, the vacuum pump 38 of the numerical control router 19 is driven and the sacrifice board 7 is drawn on to the suction table 20.
(9) After this operation, the rule stoppers 24a, 24b and 24c are returned to their original positions by the cylinders 25 and 27.
(10) Then, the process board 3 is drawn by the suction pad 16 of the robot 14 and is moved on to the sacrifice board 7.
(11) The rule stoppers 24a, 24b and 24c are driven as in operation (5) and the detecting portions 28 are arranged at the predetermined positions.
(12) The robot 14 is moved to contact the process board 3 drawn by the suction pad 16 with the detecting portions 28 of the rule stoppers 24a, 24b and 24c as in operation (6).
(13) Then, the first control unit 22 watches whether all of the sensors 29a, 29b and 29c are put on as a result of contact with the process board 3.
(14) When on signals are transmitted from the sensors 29a, 29b and 29c, the process board 3 is fixed on the sacrifice board 7 on the suction table 20 by the suction of the vacuum pump 38 of the numerical control router 19 applied by the switching of an electromagnetic valve (not shown) connected to a hosepipe of the vacuum pump 38.
(15) After the above operation, the rule stoppers 24a, 24b and 24c are returned to their original positions by the cylinders 25 and 27.
(16) Then, the second control unit 23 drives the driving unit 39 by a predetermined program and the process board 3 is processed thereby.
(17) The second control unit 23 watches whether the processing of the process board 3 is completed or not.
(18) When the processing of the process board 3 is completed, the suction in the suction table 20 is stopped and the process board 3 is drawn by the suction pad 16 of the robot 14 and is transmitted to the discharge conveyor 12.
(19) The robot control unit 17 watches whether the processing of all of the process boards 3 on the pallet is completed or not. If the processing of all of the process boards 3 is not completed, the robot 14 is returned (A) to operation (10) and the processing of the next process board 3 is initiated.
(20) If the processing of all of the process boards 3 on the pallet is completed, the main control unit 18 decides whether there are process boards 3 on other pallets to be processed or not.
(21) When processing of the process boards 3 on the next pallet is to be performed, the main control unit 18 decides whether the sacrifice board 7 is to be used again or not. When the sacrifice board 7 is used again, the program is returned (A) to operation (10) and a process board 3 is transmitted from the next pallet to the sacrifice board 7 and is processed as above.
(22) When the sacrifice board 7 is not used again, the sacrifice board 7 on the suction table 20 is moved on to the discharge conveyor 12 with the operation of the robot 14 which then returns (B) to operation (4), and after the sacrifice board 7 on the next pallet is positioned on the suction table 20, a process board 3 is processed as above.
(23) When the processing of all of the process boards 3 on all of the pallets is completed, the main control unit 18 is alerted by the signals from a switch and so on connected to the conveyor control unit 13, the vacuum pump 38 is stopped and the sacrifice board 7 becomes free on the suction table 20.
(24) The sacrifice board 7 is moved on to the discharge conveyor 12 with the drive of the robot 14 and is transmitted with the process boards 3 to the outside.

In the present embodiment, because the process board 3 is positioned on the sacrifice board 7 after the sacrifice board 7 on the pallet is positioned on the suction table 20, the process tool is not broken even if a metal table is used, and because the sacrifice board 7 can be changed simply, working efficiency is improved.

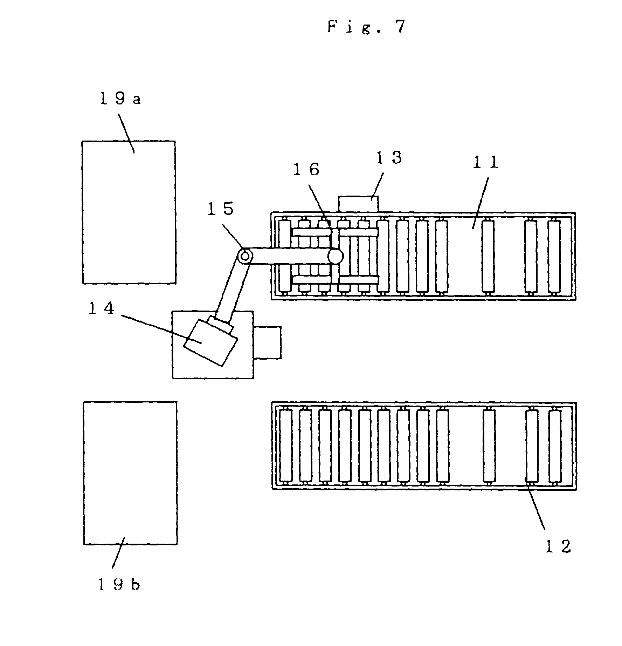

Referring to Fig. 7, in another automatic processing system, 11 is a supply conveyor; 12 is a discharge conveyor; 13 is a conveyor control unit; 14 is a robot; 15 is a working arm of the robot 14; 16 is a suction pad attached to the working arm 15 and these components are the same as in the above embodiment. A point where the present embodiment is different from the above embodiment is that numerical control routers 19a and 19b are arranged near the robot 14, the sacrifice boards 7 and the process boards 3 carried with the supply conveyor 11 are positioned by the robot 14 on the suction tables 20 of the numerical control routers 19a and 19b in order and the process boards 3, processing of which is completed, are carried to the discharge conveyor 12 in order.

In this embodiment, because two numerical control routers 19a and 19b are used, the productive capacity of the automatic processing system improves.

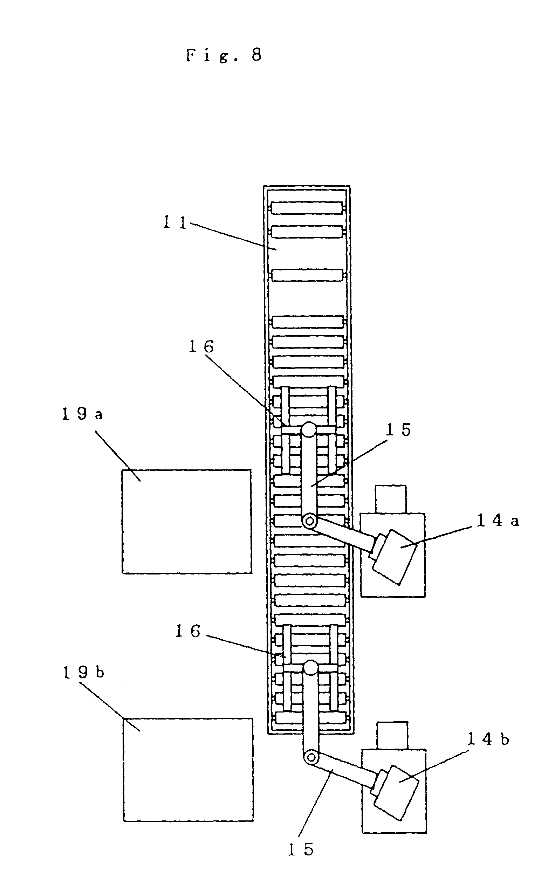

Referring to Fig. 8, in another automatic processing system, a long supply conveyor 11 is provided and numerical control routers 19a and 19b and robots 14a and 14b are arranged by opposed sides of the long supply conveyor 11.

In this embodiment, the pallets are carried by the supply conveyor 11 to two positions near the robots 14a and 14b, and sacrifice boards 7 and process boards 3 are positioned on the tables of the numerical control routers 19a and 19b in order. When the processing of the process boards 3 is complete, the pallets on which the sacrifice boards 7 and the process boards 3 are stacked are carried away by the supply conveyor 11. By the present embodiment, the productive capacity of the automatic processing system improves.

The automatic processing system of the present invention can have two or more numerical control routers.

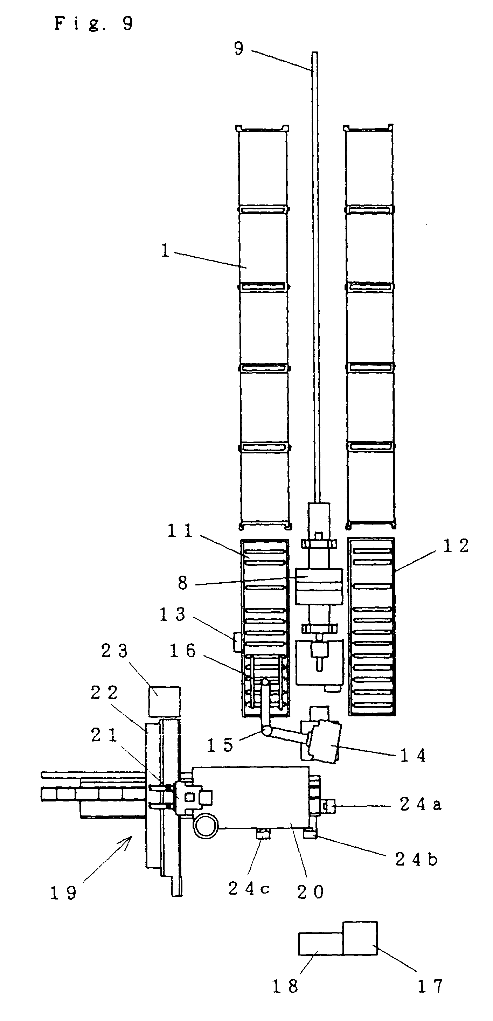

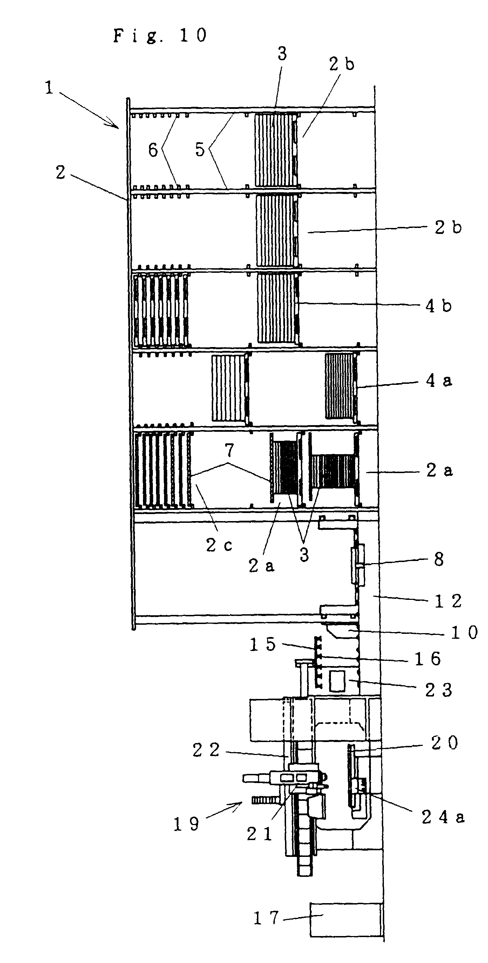

Referring to Fig. 9 and Fig. 10, two shelves 2 are arranged in a board storehouse 1, and pallets 4 on which process boards 3 are stacked are put on projection materials 6 of supports 5. Pallets 4 on which process boards 3 and sacrifice boards 7 are stacked are put on the projection materials 6 in the positions 2a of the shelves 2, and pallets 4a and 4b on which only the process boards 3 are stacked are put on the projection materials 6 in the positions 2b of the shelves 2. Sacrifice boards 7 are put on the projection materials 6 in the one position 2c of the shelves 2, and other pallets 4 can be put in other positions of the shelves 2.

Rails 9 for moving a traverser 8 are arranged between the shelves 2 and a traverser control unit 10 is arranged on the end of the rails 9. A supply conveyor 11 is arranged on one side of the traverser 8, a discharge conveyor 12 is arranged on the other side of the traverser 8 and a conveyor control unit 13 is arranged closely to the supply conveyor 11. A robot 14 is arranged near the traverser control unit 10 and has a working arm 15 and a suction pad 16 connected to the working arm 15. A robot control unit 17 is arranged apart from the route of the working arm 15 of the robot 14 and a main control unit 18 is closely arranged in the side of the robot control unit 17. A suction table 20 and a head structure 21 of numerical control router 19 are arranged near the robot 14. A first control unit 22 and a second control unit 23 are attached to the numerical control router 19 and rule stoppers 24a, 24b and 24c are attached in the bed portion of the numerical control unit 19.

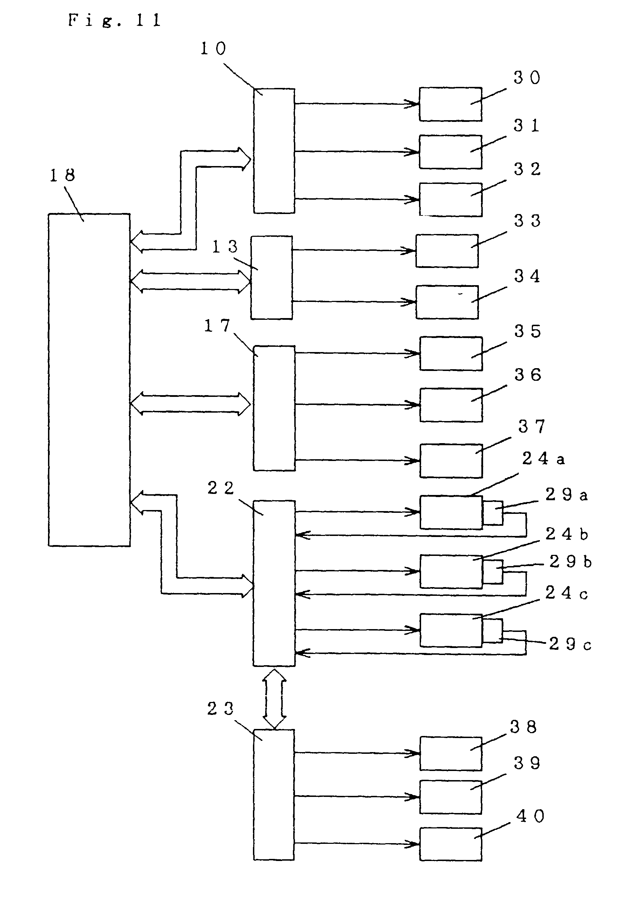

Referring to Fig. 11, the traverser control unit 10 is connected through data buses to the main control unit 18, and a drive motor 30, an up-down motor 31 and a shift cylinder 32 for the board storehouse 1 are connected to the traverser control unit 10. The conveyor control unit 13 is connected to the main control unit 18 and a motor 33 for driving the supply conveyor 11 and a motor 34 for driving the discharge conveyor 12 are connected to the conveyor control unit 13. The robot control unit 17 is connected to the main control unit 18 and a turn motor 35 for turning the robot 14, a servomotor 36 for driving the working arm 15 and a vacuum pump 37 for drawing the sacrifice boards 7 and the process boards 3 are connected to the robot control unit 17. The first and second control units 22 and 23 are connected to the main control unit 18. Rule stoppers 24a, 24b and 24c are connected to the first control unit 22 and sensors 29a, 29b and 29c are respectively connected to the rule stoppers 24a, 24b and 24c. A vacuum pump 38 for drawing the sacrifice board 7 and the process board 3 on to the table 20, a driving unit 39 for driving the numerical control router 19 and a suction sensor 40 for detecting the suction pressure in the suction table 20 are connected to the second control unit 23.

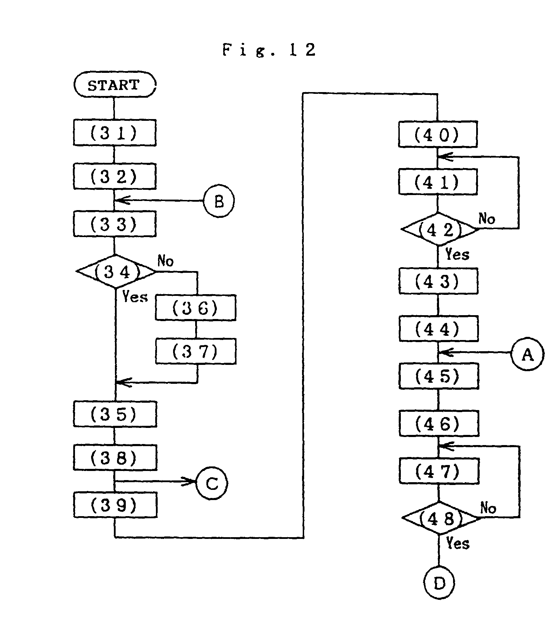

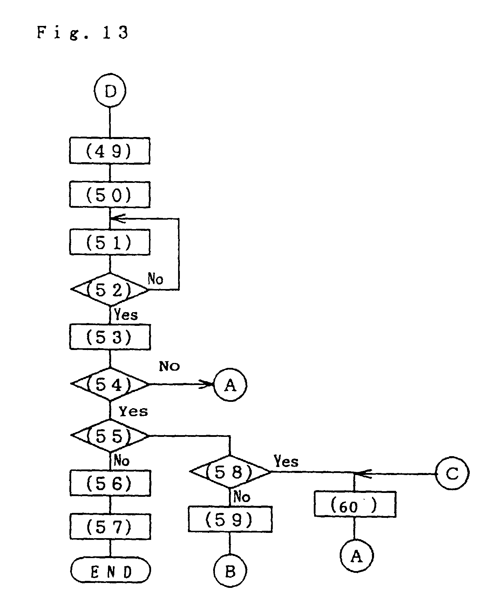

The operation of this embodiment of the automatic processing system is explained in Figs. 12 and 13 as follows:-
(31) When the system is started by putting on a power supply, the numerical control router 19 and the robot 14 are returned to original points and the traverser 8 is returned to a predetermined position.
(32) Start signals and program signals are transmitted from the main control unit 18 to the traverser control unit 10, the robot control unit 17, the conveyor control unit 13 and the first and second control units 22 and 23.
(33) The traverser control unit 10 drives the drive motor 30, the up-down motor 31 and the shift cylinder 32, the traverser 8 is moved to a predetermined position of the shelves 2 and a predetermined pallet 4 is put on the traverser 8.
(34) Then, the traverser control unit 10 decides by reference to where the traverser 8 has been moved whether a sacrifice board 7 is stacked on the process boards 3 on the pallet 4 or not.
(35) When the sacrifice board 7 is stacked on the process boards 3, the pallet 4 put on the traverser 8 is moved on the supply conveyor 11.
(36) When the sacrifice board 7 is not stacked on the process boards 3, the traverser 8 is moved to the position 2c where only the sacrifice boards 7 are located.
(37) Then, a sacrifice board 7 is stacked on the process board 3 by raising the pallet 4 and the pallet 4 is then moved on the supply conveyor 11 with the traverser 8.
(38) The motor 33 of the supply conveyor 11 is driven and the pallet 4 is transmitted to a predetermined supply position.
(39) When the pallet 4 is moved to the predetermined position, the robot control unit 17 drives the turn motor 35 of the robot 14, the working arm 15 is turned and is operated by the servomotor 36 and the suction pad 16 is moved on the sacrifice board 7. Also, the suction pad 16 draws the sacrifice board 7 by driving the vacuum pump 37 of the robot 14, the working arm 15 is driven and the sacrifice board 7 is transmitted on to the table 20.
(40) The first control unit 22 drives the cylinders 25 and 27 to arrange the detecting portions 28 of the rule stoppers 24a, 24b and 24c at predetermined positions at two adjacent sides of the bed of the numerical control router 19.
(41) The robot 14 moves the sacrifice board 7 drawn with the suction pad 16 to contact the contact portions 28' of the detecting portions 28 of the rule stoppers 24a, 24b and 24c.
(42) The first control unit 22 watches whether all of the sensors 29a, 29b and 29c are put on by the sacrifice board 7.
(43) When the sensors 29a, 29b and 29c detect the sacrifice board 7, the sacrifice board 7 is drawn on to the table 20 by the suction operation of the vacuum pump 38.
(44) After this operation, the rule stoppers 24a, 24b and 24c are returned to their original positions by the cylinders 25 and 27.
(45) The robot 14 then draws the process board 3 on the pallet 4 with the suction pad 16 and moves the process board 3 on to the sacrifice board 7.
(46) The rule stoppers 24a, 24b and 24c are moved to their predetermined positions as in operation (40) with their detecting portions 28.
(47) The robot 14 moves the process board 3 to contact the detecting portions 28 of the rule stoppers 24a, 24b and 24c as in operation (41).
(48) The first control unit 22 watches whether all of the sensors 29a, 29b and 29c are put on by the process board 3.
(49) When the sensors 29a, 29b and 29c are put on, the process board 3 is drawn on to the sacrifice board 7 by driving the vacuum pump 38 of the numerical control router 19 by switching an electromagnetic valve (not shown).
(50) After this operation, the rule stoppers 24a, 24b and 24c are returned to their original positions by the cylinders 25 and 27.
(51) The second control unit 23 drives the driving unit 39 of the numerical control router 19 and the process board 3 is processed according to the predetermined program.
(52) Then, the second control unit 23 watches whether the processing of the process board 3 is completed or not.
(53) When the processing of the process board 3 is completed, the suction is stopped on the table 20, the process board 3 is drawn by the suction pad 16 and the robot 14 transmits the process board 3 to the discharge conveyor 12.
(54) If the processing of all of the process boards 3 on the pallet is not completed, the robot 14 is returned (A) to operation (45).
(55) When the processing of all of the process boards 3 on the pallet is completed, the second control unit 23 watches by the signals from the main control unit 18 whether any other process boards 3 have been transmitted by the supply conveyor 11.
(56) When no more process boards 3 are transmitted on the supply conveyor 11, the vacuum pump 38 of the table 20 is stopped.
(57) The robot 14 moves the sacrifice board 7 on to the discharge conveyor 12. After this operation, the sacrifice board 7 is discharged with the process boards 3 on the pallet 4 to the outside of the board storehouse 1.
(58) When processing of the process boards 3 on the next pallet is to be performed, the second control unit watches according to the signals from the main control unit whether the sacrifice board 7 fixed on the table 20 is to be used again or whether another sacrifice board 7 is to be used.
(59) When the sacrifice board 7 is not used again, the vacuum pump 38 is stopped and the robot 14 moves the sacrifice board 7 on the table 20 to the discharge conveyor 12. Then, the operation is returned (B) to operation (33), a pallet 4 on which the sacrifice board 7 and the process boards 3 are stacked is transmitted from the shelves 2 to the supply conveyor 11, the sacrifice board 7 is positioned from pallet 4 to the table 20 and the process board 3 is processed after the process board 3 is positioned on the sacrifice board 7 on the table 20 in order.
(60) When the sacrifice board 7 is used again, because the pallet 4 on which the sacrifice board 7 and the process boards 3 are stacked is transmitted with the supply conveyor 11, the sacrifice board 7 is directly moved to the discharge conveyor 12 and the operation is shifted (A) to operation (45).

In this embodiment, when the sacrifice board 7 is set on the table 20, the pallet 4 on which the sacrifice board 7 and the process boards 3 are stacked is transmitted to the supply conveyor 11 by the traverser 8. Instead of this, a pallet 4 on which only the process boards 3 are stacked may be selected in the shelves 2 or a pallet 4 from which the sacrifice board 7 is removed may be transmitted with the traverser 8. Also, a pallet 4 on which only the sacrifice board 7 is present may be transmitted with the traverser 8 and supply conveyor 11, and after this a pallet 4 on which only the process boards 3 are present may be transmitted. When the sacrifice board 7 which is previously positioned is used again, because the sacrifice board 7 can be removed from the pallet 4 carrying the next process board 3, the time for positioning the sacrifice board 7 becomes short.

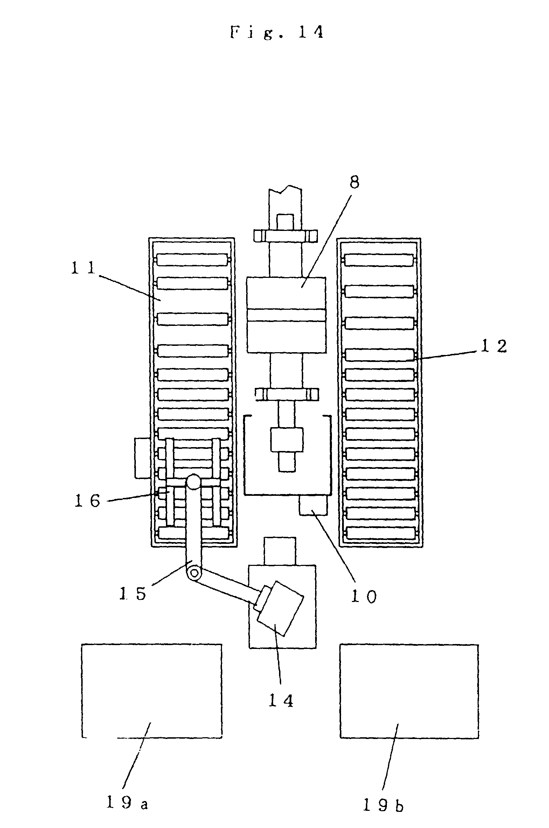

Referring to Fig. 14, 8 is a traverser; 10 is a traverser control unit; 11 is a supply conveyor; 12 is a discharge conveyor; 14 is a robot; 15 is a working arm and 16 is a suction pad. These components are the same as the above embodiments and the explanation of these components is omitted. In this embodiment, numerical control routers 19a and 19b are arranged near the robot 14, the sacrifice boards 7 and the process boards 3 which are carried with the supply conveyor 11 are set with the robot 14 in order and the process boards 3 the processing of which is performed are moved with the robot 14 to the discharge conveyor 12.

In this embodiment, the product capacity in this system is improved.

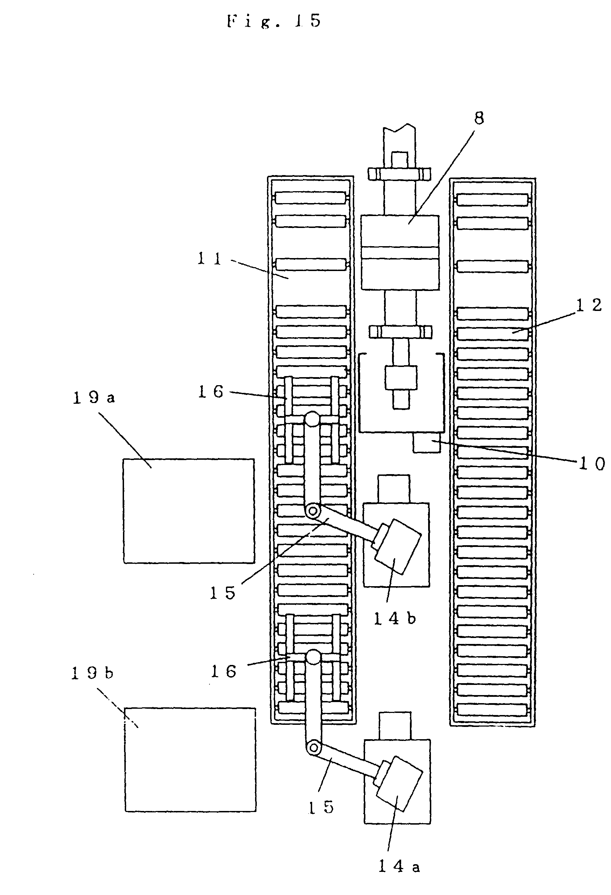

Referring to Fig. 15, 8 is a traverser; 10 is a traverser control unit; 11 is a supply conveyor; 12 is a discharge conveyor; 14a and 14b are robots; 15 is a working arm; 16 is a suction pad; and 19a and 19b are numerical control routers. These components are the same as in the above embodiments and the explanation of these components is omitted. The supply conveyor 11 and the discharge conveyor 12 are long, and the two numerical control routers 19a and 19b and the two robots 14a and 14b are arranged near the ends of the supply and discharge conveyors 11 and 12.

The pallets 4 transmitted on the supply conveyor 11 are respectively carried to predetermined positions near the robots 14a and 14b and the sacrifice boards 7 and the process boards 3 are positioned in order. When the processing of the process boards 3 is completed, the respective robots 14a and 14b move the process boards 3 or the sacrifice boards 7 to the discharge conveyor 12.

In this embodiment, the product capacity in this system is improved and there can be three or more of the numerical control routers.

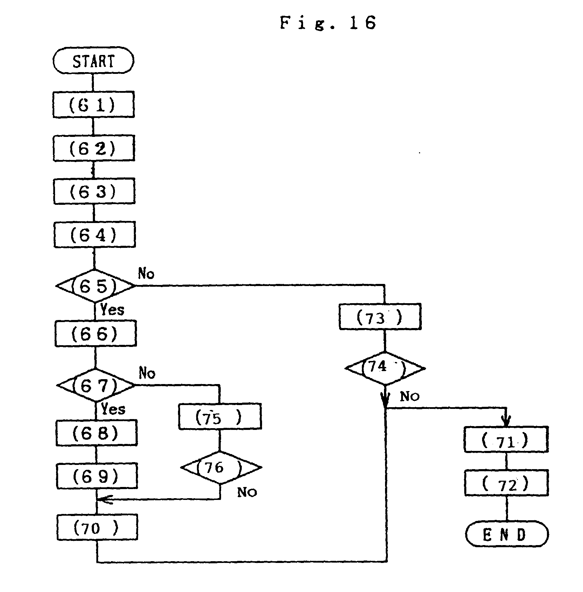

A further automatic processing system will be explained in the flow chart of Fig. 16. When the supply power is put on, the robot 14 is returned to the original position, the start signals and the program signals are transmitted from the main control unit 18 to the robot control unit 17, the conveyor control unit 13 and the first and second control units 22 and 23. Then the pallet 4 on which the sacrifice board 7 and the process boards 3 are stacked is set on the supply conveyor 11, the supply conveyor 11 is driven with motor 34 and the pallet 4 is carried to a predetermined position of the supply conveyor 11. In this case, when the pallet 4 is directly put on the predetermined position of the supply conveyor 11, the motor 34 is not driven.
(61) The robot control unit 17 drives the turn motor 35 to turn the robot 14 and the working arm 15 is driven with the servomotor 36.
(62) The suction pad 16 of the robot 14 is moved on to the sacrifice board 7 or the process board 3, the vacuum pump is driven and the sacrifice board 7 or the process board 3 is drawn with the suction pad 16.
(63) The working arm 15 is driven and the sacrifice board 7 or the process board 3 is moved on the table 20.
(64) The first control unit 22 drives the up-down cylinder 25 and the cylinder 27, the rule stoppers 24a, 24b and 24c are set in predetermined positions at two sides of the table 20, and the robot 14 moves the sacrifice board 7 or the process board 3 to the contact positions 28' of the detecting portions 28 in the rule stoppers 24a, 24b and 24c.
(65) The first control unit 22 watches whether all of the sensors 29a, 29b and 29c of the rule stoppers 24a, 24b and 24c are put on.
(66) When the sensors 29a, 29b and 29c are put on, the second control unit 23 drives the vacuum pump 38 of the table.
(67) A suction sensor 40 attached to the table 20 watches whether the suction pressure in the table 20 is set to the predetermined value or not.
(68) When the suction pressure in the table 20 is set to the predetermined value, the second control unit 23 decides that the sacrifice board 7 or the process board 3 is drawn on the table 20. After this, the rule stoppers 24a, 24b and 24c are returned to their predetermined positions by the up-down cylinder 25 and the cylinder 27.
(69) The second control unit 23 drives the driving unit 39 by the predetermined program and the process board 3 is processed.
(70) When the processing of the process board 3 is completed, the drawing operation on the table 20 is completed.
(71) The sacrifice board 7 or the process board 3 is drawn by the suction pad 16 of the robot 14 and is transmitted on to the discharge conveyor 12.
(72) The robot 14 is returned to the original position.

In such operation, when the sacrifice board 7 or the process board 3 is flat and is put on the predetermined position of the supply conveyor 11, the sacrifice board 7 or the process board 3 is correctly set on the table 20. However, when the sacrifice board 7 or the process board 3 curves or is not set on the predetermined position of the table 20, even if the sacrifice board 7 or the process board 3 is set on the table 20 with the robot 14, the sacrifice board 7 or the process board 3 may not be contacted with the three rule stoppers 24a, 24b and 24c and may not be detected with the sensors 29a, 29b and 29c.
(73) In this case, the first control unit 22 sets its timer in the predetermined time.
(74) Then the first control unit 22 watches whether all of the sensors 29a, 29b and 29c are put on in the predetermined time or not.

When the sensors 29a, 29b and 29c are not put on in the predetermined time, the operation is shifted to operation (71), the robot 14 is driven and the sacrifice board 7 or the process board 3 is transmitted on to the discharge conveyor 12.

Also, when the sacrifice board 7 or the process board 3 is in contact with all of the sensors 29a, 29b and 29c of the rule stoppers 24a, 24b and 24c and the second control unit 23 drives the vacuum pump 38 of the table 20, the sensor 40 watches whether the suction pressure in the table 20 is set in the predetermined value or not in operation (67). Then, in case that the sacrifice board 7 or the process board 3 curves, the air in the table 20 leaks. In such case, there are cases where the sacrifice board 7 or the process board 3 is drawn on the table by mere chance.
(75) Therefore, the first control unit 22 drives the timer.
(76) Then the first control unit 22 watches whether the predetermined time completes or not.

If the sacrifice board 7 or the process board 3 is not drawn in the predetermined time, the operation is shifted to (70), the suction operation in the table 20 is stopped and the sacrifice board 7 or the process board 3 is moved to the predetermined position on the discharge conveyer 12 by driving the robot 14.

## Claims

1. An automatic processing system, for use in the processing of boards, comprising:
a numerically controlled router (19) including a suction table (20) with suction holes and a head structure (21) with routing means; a sacrifice board (7), with suction holes therethrough, for positioning on the suction table (20); a supply conveyor (11) for carrying a process board (3) to a supply position; and a robot (14) for transferring the process board (3) from the supply position of the supply conveyor (11) to the suction table (20) of the numerically controlled router (19), where the process board (3) is located above the sacrifice board (7) by the use of sensors (29a, 29b, 29c); the head structure (21) being movable across the suction table (20) to enable the process board (3), when held by the application of suction through the suction holes of the suction table (20) and the suction holes of the sacrifice board (7), to be processed by the routing means of the head structure (21);
characterised in that the sensors (29a, 29b, 29c) are provided on stoppers (24a, 24b, 24c), which are themselves provided on the numerically controlled router (19) at two adjacent sides of the suction table (20) and are set by moving cylinders (25, 27); and the supply conveyor (11) carries a pallet (4) on which one or more of the process boards (3) are stacked, with the sacrifice board (7) initially being stacked on top of the single or uppermost process board (3); the robot (14) first transferring the sacrifice board (7) from the pallet (4) on to the suction table (20), then positioning said sacrifice board (7) at a predetermined position determined by contact of said sacrifice board (7) with the sensors (29a, 29b, 29c), and then transferring the single or uppermost process board (3) from the pallet (4) on to the sacrifice board (7), whereby said process board (3) is positioned at a predetermined location determined by contact of said process board (3) with the sensors (29a, 29b, 29c).

2. An automatic processing system according to claim 1, characterised in that if the sacrifice board (7) already positioned on the suction table (20) is to be retained, after sequential processing of the or all of the process boards (3) initially stacked on the pallet (4) has been completed, the sacrifice board (7) on the next pallet (4) is removed without being positioned on the suction table (20).

3. An automatic processing system according to claim 1 or claim 2, characterised in that two or more numerically controlled routers (19a, 19b) are arranged near the robot (14).

4. An automatic processing system according to claim 3, characterised in that two or more robots (14a, 14b) are associated with respective ones of the numerically controlled routers (19a, 19b).

5. An automatic processing system according to any preceding claim, characterised in that if the sacrifice board (7) is not detected by the sensors (24a, 24b, 24c) in a predetermined time, the sacrifice board (7) is removed from the suction table (20).

6. An automatic processing system according to claim 5, characterised in that if a pressure sensor (40) cannot detect the application of predetermined suction in the suction table (20), after the sacrifice board (7) has been detected by the sensors (24a, 24b, 24c), the sacrifice board (7) is removed from the suction table (20).

7. An automatic processing system according to any preceding claim, characterised in that if the process board (3) is not detected by the sensors (24a, 24b, 24c) in a predetermined time, the process board (3) is removed without being processed.

8. An automatic processing system according to claim 7, characterised in that if a pressure sensor (40) cannot detect the application of predetermined suction in the suction table (20), after the process board (3) has been detected by the sensors (24a, 24b, 24c), the process board (3) is removed without being processed.

9. An automatic processing system according to any preceding claim, characterised in that a board storehouse (1) is provided having shelves (6) for storing a plurality of pallets (4), a plurality of process boards (3) and a plurality of sacrifice boards (7), and a traverser (8) is provided for carrying the pallets (4) from the shelves (6) to the supply conveyor (11).

10. An automatic processing system according to claim 9, characterised in that a traverser control unit (10) for controlling the movement of the traverser (8), a supply conveyor control unit (13) for controlling the drive of the supply conveyor (11) and a robot control unit (17) for controlling the working of the robot (14) are driven by command signals from a main control unit (18).

## Patentansprüche

1. Automatisches Betriebssystem zur Anwendung bei der Bearbeitung von Platten mit:
einem numerisch gesteuerten Rauter (19) mit einem Saugtisch (20) mit Saugkanälen und einer Kopfkonstruktion (21) mit Führungsmitteln; einer Opferplatte (7) mit durch diese hindurchverlaufenden Saugkanälen, zur Positionierung auf dem Saugtisch (20); einer Zuführ-Fördereinrichtung (11) zum Transport einer zu bearbeitenden Platte (3) zu einer Zuführ-Position; und einem Roboter (14) zum Überführen der zu bearbeitenden Platte (3) von der Zuführ-Position der Zuführ-Fördereinrichtung (11) zu dem Saugtisch (20) des numerisch gesteuerten Rauters (19), wo die zu bearbeitende Platte (3) auf der Opferplatte (7) mit Hilfe von Sensoren (29a, 29b, 29c) angeordnet wird; wobei die Kopfkonstruktion (21) über den Saugtisch (20) beweglich ist, um zu ermöglichen, daß die zu bearbeitende Platte (3) durch die Rautermittel der Kopfkonstruktion (21) bearbeitet wird, wenn diese durch Anwendung eines Saugdruckes in den Saugkanälen des Saugtisches (20) und den Saugkanälen der Opferplatte (7) gehalten wird;
dadurch gekennzeichnet, daß die Sensoren (29a, 29b, 29c) mit Anschlägen (24a, 24b, 24c) versehen sind, die wiederum an dem numerisch gesteuerten Rauter (19) an zwei benachbarten Seiten des Saugtisches (20) angeordnet sind und durch sich bewegende Zylinder (25, 27) eingestellt werden; und die Zuführ-Fördereinrichtung (11) eine Stapelplatte (4) trägt, auf der eine oder mehrere der zu bearbeitenden Platten (3) gestapelt werden, wobei die Opferplatte (7) anfänglich oben auf die eine oder mehrere zu bearbeitenden Platten (3) gelegt wird; der Roboter (14) anfänglich die Opferplatte (7) von der Stapelplatte (4) auf den Saugtisch (20) überführt, dann die Opferplatte (7) an einer vorbestimmten Position, die und durch eine Berührung der Opferplatte (7) mit den Sensoren (29a, 29b, 29c) bestimmt wird, positioniert, und dann die eine oder die oberste zu bearbeitende Platte (3) von der Stapelplatte (4) auf die Opferplatte (7) überführt,
wodurch die zu bearbeitende Platte (3) an einem vorbestimmten Ort positioniert wird, der durch eine Berührung der zu bearbeitenden Platte (3) mit den Sensoren (29a, 29b, 29c) bestimmt wird.

2. Automatisches Betriebssystem nach Anspruch 1,
dadurch gekennzeichnet, daß in dem Fall, in dem die bereits auf dem Saugtisch (20) positionierte Opferplatte (7) zurückzuhalten ist, nachdem eine sequentielle Bearbeitung von der oder allen zu bearbeitenden Platten (3), die anfänglich auf der Stapelplatte (4) gestapelt waren, abgeschlossen worden ist, die Opferplatte (7) auf der nächsten Stapelplatte (4) entfernt wird, ohne auf dem Saugtisch (20) positioniert worden zu sein.

3. Automatisches Betriebssystem nach Anspruch 1 oder 2,
dadurch gekennzeichnet, daß zwei oder mehr numerisch gesteuerte Rauter (19a, 19b) in der Nähe des Roboters (14) angeordnet sind.

4. Automatisches Betriebssystem nach Anspruch 3,
dadurch gekennzeichnet, daß zwei oder mehr Roboter (14a, 14b) entsprechenden Robotern der numerisch gesteuerten Rauter (19a, 19b) zugeordnet sind.

5. Automatisches Betriebssystem nach einem der vorhergehenden Ansprüche,
dadurch gekennzeichnet, daß in dem Fall, in dem die Opferplatte (7) innerhalb einer vorbestimmten Zeit durch die Sensoren (24a, 24b, 24c) nicht erfaßt wird, die Opferplatte (7) von dem Saugtisch (20) entfernt wird.

6. Automatisches Betriebssystem nach Anspruch 5,
dadurch gekennzeichnet, daß in dem Fall, in dem ein Drucksensor (40) die Anwendung eines vorbestimmten Saugdruckes in dem Saugtisch (20) nicht erfassen kann, nachdem die Opferplatte (7) durch die Sensoren (24a, 24b, 24c) erfaßt worden ist, die Opferplatte (7) von dem Saugtisch (20) entfernt wird.

7. Automatisches Betriebssystem nach einem der vorhergehenden Ansprüche,
dadurch gekennzeichnet, daß in dem Fall, in dem die zu bearbeitende Platte (3) innerhalb einer vorbestimmten Zeit durch die Sensoren (24a, 24b, 24c) nicht erfaßt wird, die zu bearbeitende Platte (3) ohne Bearbeitung entfernt wird.

8. Automatisches Betriebssystem nach Anspruch 7,
dadurch gekennzeichnet, daß in dem Fall, in dem ein Drucksensor (40) die Anwendung eines vorbestimmten Saugdruckes in dem Saugtisch (20) nicht erfassen kann, nachdem die zu bearbeitende Platte (3) durch die Sensoren (24a, 24b, 24c) erfaßt worden ist, die zu bearbeitende Platte (3) ohne Bearbeitung entfernt wird.

9. Automatisches Betriebssystem nach einem der vorhergehenden Ansprüche,
dadurch gekennzeichnet, daß ein Platten-Lagerhaus (1) mit Fächern (6) zur Lagerung einer Mehrzahl von Stapelplatten (4), einer Mehrzahl von zu bearbeitenden Platten (3) und einer Mehrzahl von Opferplatten (7) sowie eine Fahrbühne (8) zum Transport der Stapelplatten (4) aus den Fächern (6) zu der Zuführ-Fördereinrichtung (11) vorgesehen ist.

10. Automatisches Betriebssystem nach Anspruch 9,
dadurch gekennzeichnet, daß eine Fahrbühnen-Steuereinheit (10) zum Steuern der Bewegung der Fahrbühne (8), eine Steuereinheit (13) für die Zuführ-Fördereinrichtung zum Steuern des Antriebes der Zuführ-Fördereinrichtung (11), sowie eine Roboter-Steuereinheit (17) zum Steuern der Tätigkeit des Roboters (14) durch Befehlssignale aus einer Haupt-Steuereinheit (18) betrieben wird.

## Revendications

1. Système automatique de traitement destiné à être utilisé pour le traitement de panneaux, comprenant :
une mortaiseuse (19) à commande numérique qui comporte une table aspirante (20) ayant des trous d'aspiration et une structure à tête (21) ayant un dispositif à mortaiseuse, un panneau consommable (7), ayant des trous d'aspiration qui le traversent et destiné à être positionné sur la table aspirante (20), un transporteur d'alimentation (11) destiné à transporter un panneau traité (3) en position d'alimentation, et un robot (14) destiné à transférer le panneau traité (3) de la position d'alimentation du transporteur d'alimentation (11) à la table aspirante (20) de la mortaiseuse (19) à commande numérique, dans lequel le panneau traité (3) est placé au-dessus du panneau consommable (7) à l'aide de capteurs (29a, 29b, 29c), la structure à tête (21) étant mobile au-dessus de la table aspirante (20) pour permettre au panneau traité (3), lorsqu'il est maintenu par application du vide par les trous d'aspiration de la table aspirante (20) et les trous d'aspiration du panneau consommable (7), d'être traité par le dispositif à mortaiseuse de la structure à tête (21),
caractérisé en ce que les capteurs (29a, 29b, 29c) sont placés sur des organes d'arrêt (24a, 24b, 24c) qui sont eux-mêmes placés sur la mortaiseuse (19) à commande numérique sur les deux côtés adjacents de la table aspirante (20) et sont positionnés par déplacement de vérins (25, 27), et le transporteur d'alimentation (11) porte une palette (4) sur laquelle sont empilés un ou plusieurs panneaux traités (3), le panneau consommable (7) ayant été empilé initialement sur le panneau traité unique ou supérieur (3), le robot (14) transférant d'abord le panneau consommable (7) de la palette (4) à la table aspirante (20), puis positionnant le panneau consommable (7) en position prédéterminée par contact du panneau consommable (7) avec les capteurs (29a, 29b, 29c), puis transférant le panneau traité unique ou supérieur (3) de la palette (4) au panneau consommable (7), si bien que le panneau traité (3) est positionné à un emplacement prédéterminé par contact du panneau traité (3) avec les capteurs (29a, 29b, 29c).

2. Système automatique de traitement selon la revendication 1, caractérisé en ce que, lorsque le panneau consommable (7) déjà positionné sur la table aspirante (20) doit être retenu, après le traitement successif du panneau traité ou de tous les panneaux traités (3) empilés initialement sur la palette (4), le panneau consommable (7) de la palette suivante (4) est retiré sans être positionné sur la table aspirante (20).

3. Système automatique de traitement selon la revendication 1 ou 2, caractérisé en ce qu'au moins deux mortaiseuses à commande numérique (19a, 19b) sont placées près du robot (14).

4. Système automatique de traitement selon la revendication 3, caractérisé en ce que deux robots au moins (14a, 14b) sont associés aux mortaiseuses respectives à commande numérique (19a, 19b).

5. Système automatique de traitement selon l'une quelconque des revendications précédentes, caractérisé en ce que, lorsque le panneau consommable (7) n'est pas détecté par les capteurs (24a, 24b, 24c) après un temps prédéterminé, le panneau consommable (7) est retiré de la table aspirante (20).

6. Système automatique de traitement selon la revendication 5, caractérisé en ce que, lorsqu'un capteur de pression (40) ne peut pas détecter l'application d'une aspiration prédéterminée dans la table aspirante (20), après que le panneau consommable (7) a été détecté par les capteurs (24a, 24b, 24c), le panneau consommable (7) est retiré de la table aspirante (20).

7. Système automatique de traitement selon l'une quelconque des revendications précédentes, caractérisé en ce que, lorsque le panneau traité (3) n'est pas détecté par les capteurs (24a, 24b, 24c) après un temps prédéterminé, le panneau traité (3) est retiré sans être traité.

8. Système automatique de traitement selon la revendication 7, caractérisé en ce que, lorsqu'un capteur de pression (40) ne peut pas détecter l'application d'une aspiration prédéterminée dans la table aspirante (20), après que le panneau traité (3) a été détecté par les capteurs (24a, 24b, 24c), le panneau traité (3) est retiré sans être traité.

9. Système automatique de traitement selon l'une quelconque des revendications précédentes, caractérisé en ce qu'un entrepôt à panneaux (1) est disposé avec des étagères (6) de stockage de plusieurs palettes (4), de plusieurs panneaux traités (3) et de plusieurs panneaux consommables (7), et un organe de déplacement (8) est destiné à transporter les palettes (4) des étagères (6) au transporteur d'alimentation (11).

10. Système automatique de traitement selon la revendication 9, caractérisé en ce qu'une unité de commande (10) d'organe de déplacement destinée à commander le mouvement de l'organe de déplacement (8), une unité (13) de commande de transporteur d'alimentation destinée à commander l'entraînement du transporteur d'alimentation (11) et une unité (17) de commande de robot destinée à commander le fonctionnement du robot (14) sont pilotées par les signaux de commande provenant d'une unité principale de commande (18).
